# DEMANDE DE BREVET EUROPEEN

(11) **EP 2 725 806 A1**
(43) Date de publication de la demande: **30.04.2014**
(21) Numéro de dépôt: 12306315.8
(22) Date de dépôt: 23.10.2012
(51) Int. Cl.: H04N 13/04

(54) **Dispositif et procédé de calibration des paramètres stéréoscopiques d'affichage d'un système de réalité virtuelle**

(71) Demandeur: Meyrueis, Vincent, 67000 Strasbourg (FR)
(72) Inventeur: Meyrueis, Vincent, 67000 Strasbourg (FR)
(74) Mandataire: Merckling, Norbert

(57) **Abrégé**

La présente invention concerne un dispositif de calibration des paramètres stéréoscopiques d'affichage d'un système de réalité virtuelle caractérisé en ce qu'il comprend, une paire de lunettes (3), ladite paire de lunettes (3) étant destinée à être portée par l'utilisateur, au moins trois capteurs (3a) de référencement apposés sur les lunettes (3), un viseur (2) dont le déclenchement est actionné par l'utilisateur portant les lunettes (3), des capteurs de positionnement (2a) apposés sur le viseur (2), un ensemble de tracking pour identifier par rapport à des référentiels les positions des éléments des éléments constitutifs du système de réalité virtuelle, notamment grâce aux capteurs (2a, 3a), au moins un écran (4) stéréoscopique, un ensemble de cibles (5a, 5b, 5c, 5d) générées affichées sur l'écran (4) et visées par le viseur (2) et des moyens informatiques communiquant avec les capteurs (2a, 3a), l'écran (4) et la télécommande du viseur (2), d'une part pour repérer les cibles visées et d'autre part pour calculer et enregistrer les données de calibration ainsi obtenues.

## Description

La présente invention se rapporte au domaine technique général de la réalité virtuelle et de ses applications.

L'invention concerne plus particulièrement un dispositif et un procédé de calibration des paramètres stéréoscopiques d'affichage dans un ensemble de réalité virtuelle.

Les utilisateurs d'un dispositif de réalité virtuelle peuvent exploiter un tel dispositif pour des besoins de distraction (jeux, apprentissage, simulateur de pilotage d'avion), de conception de produits (conception assistée par ordinateurs), pour la présentation de produits à des clients (véhicules, habitations etc.), pour des applications médicales (simulation chirurgicale, de diagnostic etc.), de défense (simulation d'un champs de bataille) et d'éclairage (simulation de dispositif d'éclairage d'intérieur ou d'extérieur). Cette liste n'est bien entendu pas limitative.

L'affichage d'images en relief, sur des systèmes de réalité virtuelle dits d'immersion, présente de très nombreuses contraintes dues à la limitation des configurations et aux conditions de restitution à gérer. A cause de ces contraintes, l'utilisation de cette technologie a souvent été restreinte à un usage professionnel. La connaissance de la position des yeux de l'utilisateur est un paramètre important pour assurer une restitution des images correctes par rapport aux objectifs d'exploitation sur les systèmes de réalité virtuelle.

Des méthodes et des dispositifs de calibration de la position des yeux de l'utilisateur ont été proposés, pour maîtriser la restitution rigoureuse de la profondeur perçue par l'utilisateur en se basant sur la mesure de la distance interoculaire à l'aide d'un pupillomètre et sur le suivi de la position de la tête de l'utilisateur dans l'espace à l'aide d'un dispositif de tracking basé sur des capteurs de position. Cependant, la mesure estimée, sans instruments de mesure d'un point de vue et de la distance interoculaire, ne permet pas de positionner précisément la position des yeux de l'utilisateur par manque de données métrologiques. En outre ceci ne permet pas au système de réalité virtuelle de retranscrire correctement les images, c'est-à-dire avec des positionnements spatiaux des éléments de cette image rigoureux, par rapport au modèle et à la théorie correspondant à la bonne position des yeux de l'utilisateur. Dans le cadre de la synthèse d'image en réalité virtuelle, ceci peut contribuer à une mauvaise perception des formes dans l'espace, pour toutes les applications de la réalité virtuelle. La connaissance rigoureuse et si possible facile à prendre en compte de la position des yeux est donc un besoin important pour la calibration des systèmes stéréoscopiques de réalité virtuelle afin d'assurer leur bon fonctionnement.

L'objectif poursuivi par la réalité virtuelle est de visualiser des scènes en trois dimensions réelles, grâce à la vision stéréoscopique, perceptibles suivant différents angles d'observations avec des possibilités d'interaction au moyen d'interfaces sensori-motrices. Un système de réalité virtuelle doit également favoriser un travail collaboratif en assurant l'immersion des multi - utilisateurs et en leur procurant les moyens d'interagir avec l'environnement virtuel pour des tâches diverses.

En fonction de l'application, il existe plus ou moins de tolérance à la prise en compte de paramètres morpho-géométriques (position des yeux de l'utilisateur). L'influence de ces paramètres est très perceptible dans les applications nécessitant la manipulation directe et fine d'objets virtuels dans les dispositifs immersifs. Ils sont moins perceptibles lorsque la manipulation d'objets se fait de manière indirecte, par l'intermédiaire d'interfaces distantes.

Ainsi, pour des applications demandant la manipulation fine d'objets, notamment de conception et de plus en plus dans d'autres domaines, il sera nécessaire de calibrer le dispositif de réalité virtuelle en déterminant en temps réel la position des yeux de l'utilisateur par rapport aux écrans stéréoscopiques utilisés.

Différentes technologies permettant l'affichage d'images stéréoscopiques existent, du genre dalles de types cristaux liquides ou plasma, OLED ou vidéo-projections de différents types. Il est donc intéressant de disposer d'une calibration indépendante du type de technologie utilisée.

Des méthodes de correction existent pour compenser le léger déplacement inévitable de certains écrans. Ces méthodes se basent sur l'ajout d'une couche corrective basée sur un modèle de transformation défini à partir d'une liste de points rendus dans l'espace par les écrans stéréoscopiques, que l'utilisateur devra pointer de manière subjective. Ce modèle de transformation ne permet pas cependant d'affiner les paramètres de base (position écran, position des yeux) nécessaires à la synthèse des images stéréoscopiques devant être exploitées rigoureusement. De plus, cette couche corrective telle qu'elle est commercialisée, ne permet pas de dissocier les erreurs propres à la perception de l'utilisateur de celles liées à la position des écrans.

En outre, les méthodes de calibration connues sont souvent spécifiques à la technologie de formation des images 3D utilisée et sont très souvent d'utilisation complexe et nécessitent un temps d'apprentissage et de mise en oeuvre relativement long.

Les paramètres morphologiques des utilisateurs sont donc rarement pris en compte de manière satisfaisante avec les dispositifs de calibration existants. Les méthodes de calibrage connues utilisent par exemple des paramètres du genre distance intraoculaire des utilisateurs, le suivi en position et en orientation de la tête des utilisateurs ainsi que la position et l'orientation des écrans relatives à la position d'origine du suivi de la tête, entraînant inévitablement des erreurs.

Ces méthodes de calibration connues présentent l'inconvénient de ne pas définir l'ensemble des paramètres nécessaires au calibrage et notamment la position des yeux des utilisateurs dans le référentiel utilisé pour le suivi de la tête des utilisateurs. Il faut noter à ce titre, que le positionnement des yeux par rapport au point de suivi de la tête n'est pas standard et peut varier en fonction de la morphologie de ladite tête et plus particulièrement lorsque ce point de suivi est défini sur des lunettes portées par l'utilisateur. Ce positionnement peut en effet varier en fonction de la manière dont l'utilisateur porte les lunettes sur son nez.

L'objet de la présente invention vise par conséquent à répondre à un besoin bien défini et à fournir un dispositif de calibration ne présentant pas les inconvénients de l'art antérieur et dont la fabrication et l'utilisation sont particulièrement simples.

L'objet de la présente invention vise également à proposer un procédé pour remédier aux inconvénients de l'art antérieur en optimisant les paramètres de calibrage et dont la mise en oeuvre est extrêmement simple et rapide avec un apprentissage minimal.

Les objets assignés à l'invention sont atteints à l'aide d'un dispositif de calibration des paramètres stéréoscopiques d'affichage d'un système de réalité virtuelle **caractérisé en ce qu'il** comprend :
- un capteur de position et d'orientation de la tête de l'utilisateur, fixé sur une paire de lunettes séparatrices du type à obturation sélective de la vision droite et gauche, ladite paire de lunettes étant destinée à être portée par l'utilisateur,
- un viseur manipulé par l'utilisateur portant les lunettes séparatrices, comportant deux mires de pointages sensiblement à ses extrémités,
- un capteur de positionnement et d'orientation apposé sur le viseur,
- au moins un écran stéréoscopique pour afficher des cibles de pointages sur ledit écran,
- une télécommande pour déclencher la capture de données lorsque l'utilisateur détecte l'alignement des mires de pointage avec une des cibles de pointage affichées à l'écran,
- et des moyens informatiques communiquant avec les capteurs de positionnement et d'orientation, pour traiter les données de calibration ainsi obtenues.

Selon un exemple de réalisation du dispositif conforme à l'invention, le viseur comprend d'une part un tube de visée dans lequel sont intégrés deux mires de pointage définissant des points de visée distants l'un de l'autre, à savoir un point de visée proximal et un point de visée distal et d'autre part une poignée de préhension supportant le tube de visée et dirigée sensiblement vers le bas lors de l'utilisation dudit viseur.

Le dispositif conforme à l'invention présente l'avantage de pouvoir réaliser une calibration en quelques minutes seulement.

Un autre avantage du dispositif conforme à l'invention, réside dans la possibilité offerte à l'utilisateur de choisir entre plusieurs modes de calibration. L'utilisateur peut ainsi calibrer la position des yeux seule, la position de l'écran seule ou procéder aux deux modes de calibration précités en une seule opération. Le dispositif conforme à l'invention comprend donc implicitement un pupillomètre 3D.

Les objets assignés à l'invention sont également atteints à l'aide d'un procédé de calibration des paramètres stéréoscopiques d'affichage d'un système de réalité virtuelle, mis en oeuvre à l'aide d'un dispositif de calibration tel que présenté ci-dessus, ledit procédé consistant à :
- a) afficher sur l'écran du système de réalité virtuelle, au moins trois cibles de pointage qui ont été programmées pour être visibles par l'utilisateur,
- b) à des fins d'acquisition successive des cibles, viser lesdites cibles à l'aide du viseur et passer, après l'acquisition d'une cible, à la cible suivante en modifiant légèrement la position du viseur sans changer la position du capteur qui suit la tête de l'utilisateur,
- c) détecter les signaux émis par les capteurs de positionnement et de référencement pour prendre en compte à l'aide des moyens informatiques le positionnement des yeux par rapport au capteur qui suit la tête et la position de l'écran grâce à l'ensemble des points géométriques relevés,
- d) et compenser les défauts de positionnement des images stéréoscopiques sur l'écran par des déformations correctives de ces images,

Selon un exemple de mise en oeuvre, le procédé consiste à effectuer une calibration de la position des yeux en alignant successivement chaque oeil avec deux points de visée du viseur et en déclenchant une détection par l'intermédiaire de la télécommande dès que l'alignement est atteint, puis en répétant l'opération au moins une fois en modifiant de façon significative l'angle relatif entre la tête et le viseur.

Selon un exemple de mise en oeuvre, le procédé consiste à effectuer une calibration de la position de l'écran en visant avec le viseur successivement les trois cibles affichées sur l'écran à des fins d'acquisition avec la télécommande et à répéter cette opération au moins une fois après s'être déplacé par rapport à sa position de mesure et d'acquisition précédente.

Selon un autre exemple de mise en oeuvre, le procédé consiste à effectuer une calibration conjointe des positions des yeux et de l'écran en visant avec le viseur successivement les trois cibles affichées sur l'écran à des fins d'acquisition avec la télécommande et à répéter cette opération au moins une fois après s'être déplacé par rapport à sa position de mesure et d'acquisition précédente, en conservant la tête droite et en changeant d'oeil après chaque acquisition de cible.

Le procédé conforme à l'invention présente l'énorme avantage de permettre de définir en une seule séquence de mesures, l'intégralité des paramètres de calibration et de garantir par conséquent la position exacte des yeux et de l'écran dans le référentiel utilisé pour le suivi de la tête de l'utilisateur.

Le procédé conforme à l'invention présente également l'avantage d'être d'une grande simplicité dans sa mise en oeuvre, avec des étapes très intuitives pour l'utilisateur.

Un autre avantage du procédé conforme à l'invention réside dans sa grande rapidité de mise en oeuvre.

Un autre avantage de l'invention réside dans le fait qu'elle permet de définir avec précision les paramètres de base (position des écrans, position des yeux) sans avoir à utiliser une couche corrective qui rend le système plus complexe et qui perturbe la compréhension de certains phénomènes perceptifs dans certains cas de l'analyse scientifique et de l'exploitation rigoureuse de la réalité virtuelle, notamment pour des applications professionnelles.

Un autre avantage du dispositif et du procédé conformes à l'invention, résulte du fait qu'ils sont indépendants du moyen d'affichage utilisé et qu'ils s'adaptent à tout système de réalité virtuelle.

D'autres caractéristiques et avantages de l'invention apparaîtront plus en détails à l'aide des dessins, donnés ci-après à titre d'exemples non limitatifs, dans lesquels :
- la figure 1, est une vue schématique d'ensemble montrant un utilisateur avec un viseur et un capteur de suivi de la tête fixé sur les lunettes séparatrices d'un dispositif de calibration conforme à l'invention, lors d'une opération de calibration devant un écran,
- la figure 2, représente un exemple de réalisation du viseur d'un dispositif de calibration conforme à l'invention,
- la figure 3, est une représentation graphique illustrant la prise en compte des parallaxes,
- la figure 4, est une illustration d'un exemple de déformation sur un cube, perçue avec une mauvaise position de la tête de l'utilisateur du système de réalité virtuelle, et
- la figure 5, est une illustration d'un exemple de déformation sur un cube, perçue avec une mauvaise prise en compte de l'écartement des yeux de l'utilisateur du système de réalité virtuelle.

Le dispositif et le procédé conformes à l'invention, qui constituent l'invention permettent une calibration rapide avec un niveau de précision adapté à la plupart des exploitations d'ensembles de réalité virtuelle notamment en conception ou en visualisation d'objets virtuels. Il présente l'avantage d'être d'utilisation simple, rapide et adaptable à la plupart des dispositifs de réalité virtuelle connus.

Un calibrage d'un système de réalité virtuelle nécessite un ensemble positionnement dit moyens de « tracking ». Il en existe basés sur des principes optiques, radios ou des détecteurs apposés sur différents composants de l'ensemble qui ont leur positionnement identifié par rapport aux référentiels constituant les différents sous-ensembles du dispositif de réalité virtuelle.

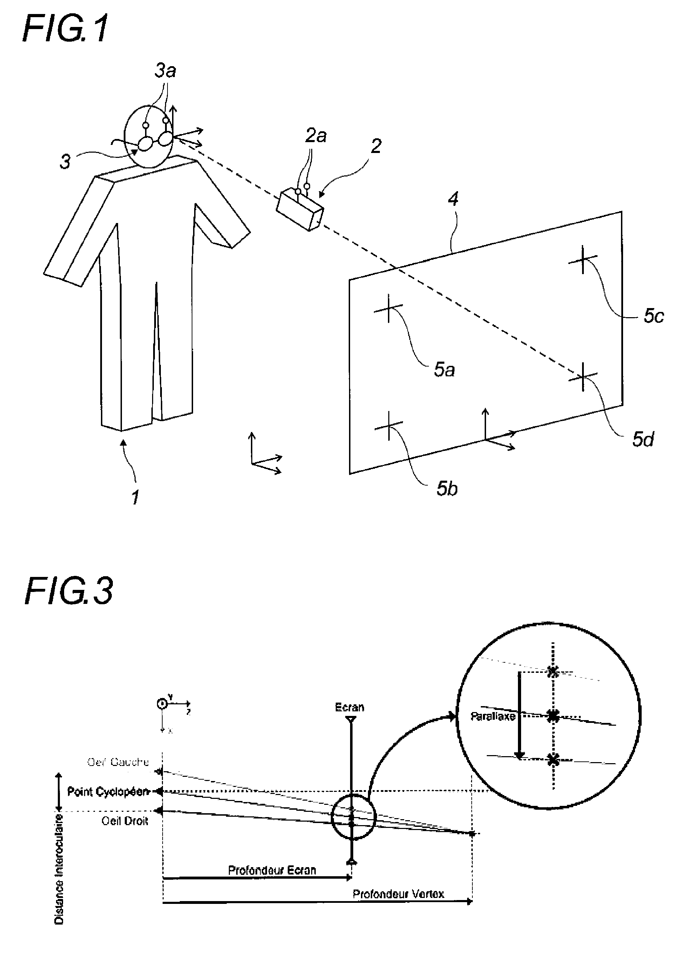

La figure 1, est une vue schématique d'ensemble montrant un utilisateur 1 avec un viseur 2 et des lunettes séparatrices 3 d'un dispositif de calibration conforme à l'invention, lors d'une opération de calibration devant un écran 4. Ce dernier peut à titre d'exemple être associé à un projecteur. A titre de variante, il peut s'agir aussi d'un écran plasma, polarisant, à micro prismes ou à microlentilles.

A titre d'exemple, des dispositifs pour le référencement spatial à apposer sur les lunettes 3 et/ou sur le viseur 2 peuvent prendre l'aspect de petites boules rétro-réfléchissantes. Des capteurs de référencement 3a, pour le positionnement et l'orientation, sont par exemple apposés au nombre de trois sur les lunettes séparatrices 3.

Le dispositif de calibration conforme à l'invention comprend donc des moyens de « tracking » pour identifier dans un seul et même référentiel les positions du viseur 2 d'une part et de la tête par l'intermédiaire d'au moins un capteur 3a fixé sur les lunettes d'autre part. Le viseur 2 comporte à cet effet des capteurs de positionnement 2a.

A titre d'exemple, des détecteurs - transpondeurs pour le référencement qui peuvent prendre l'aspect de petites boules rétro-réfléchissante. De tels capteurs de référencement 3a, par exemple au nombre de trois, seront apposés sur les lunettes séparatrices 3 ou passives, selon la technologie appropriée séparant la vision de l'oeil gauche et de l'oeil droit. L'espacement des deux yeux aura été préalablement mesuré avec un pupillomètre, connu en tant que tel et non représenté aux figures.

Il est à noter que le positionnement des yeux par rapport aux lunettes 3 séparatrices de perception de l'oeil gauche et de l'oeil droit de la vision stéréoscopique n'est pas standard et peut varier en fonction de la morphologie du visage, particulièrement du nez et de la façon dont sont portées les lunettes 3 séparatrices, ce qui entrainera l'apparition des spécificités de l'ensemble oeil - lunettes.

Le viseur 2 selon l'invention prendra la forme d'un dispositif de visée dont le déclenchement est commandé par l'utilisateur du système de réalité virtuelle et ce à l'aide d'un télécommande. A titre d'exemple, des cibles 5a, 5b, 5c, 5d visées, au nombre de trois minimum, seront affichées sur l'écran 4.

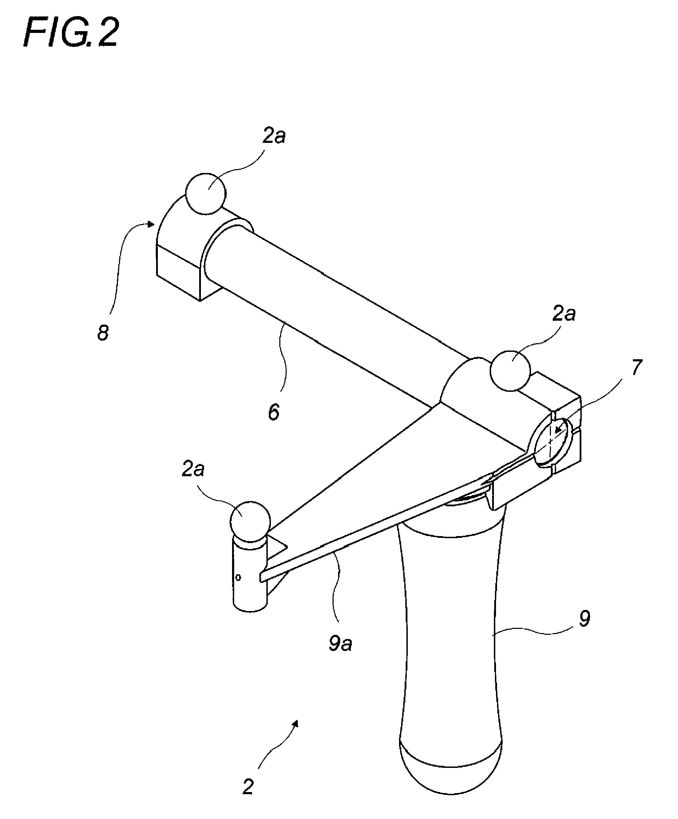

La figure 2 représente un exemple de réalisation du viseur 2 d'un dispositif de calibration conforme à l'invention.

Le viseur 2 comprend un tube de visée 6 dans lequel sont intégrés deux mires de pointage constituant des repères de visée 7 et 8 définissant respectivement des points distants l'un de l'autre, à savoir un point de visée proximal et un point de visée distal.

Le viseur 2 comprend également une poignée de préhension 9 supportant le tube de visée 6 et dirigée sensiblement vers le bas lors de l'utilisation dudit viseur 2. L'un des capteurs de positionnement 2a est avantageusement déporté à l'extrémité d'un bras latéral 9a de manière à déterminer avec précision, de façon connue, la position dans l'espace du viseur 2.

La télécommande de déclenchement de la calibration, peut à titre d'exemple, être sans fil ou filaire et intégrée ou non dans la poignée de préhension 9.

Le procédé de calibrage conforme à l'invention consiste, selon une étape a), à afficher sur l'écran 4 du système de réalité virtuelle, simultanément trois cibles de pointage 5a, 5b, 5c ou 5d qui ont été programmées pour être visibles par l'utilisateur.

Selon une étape b), le procédé consiste, à des fins d'acquisition successive des cibles, à viser lesdites cibles à l'aide du viseur 2 et passer, après l'acquisition d'une cible, à la cible suivante en modifiant légèrement la position du viseur 2 sans changer la position du capteur de tête 3a fixé sur les lunettes séparatrices 3.

Selon une étape c), le procédé consiste à détecter les signaux émis par les capteurs de positionnement et de référencement pour prendre en compte à l'aide des moyens informatiques le positionnement des yeux par rapport à la paire de lunettes 3 et la position de l'écran 4 grâce à l'ensemble des points géométriques relevés,

Selon une étape d), le procédé consiste à compenser les défauts de positionnement des images stéréoscopiques par des déformations d'images sur l'écran (4).

Selon un exemple de mise en oeuvre conforme à l'invention, le procédé consiste à effectuer une calibration de la position des yeux en alignant successivement chaque oeil avec deux points de visée du viseur 2 et en déclenchant une détection par l'intermédiaire de la télécommande dès que l'alignement est atteint, puis en répétant l'opération au moins une fois en modifiant de façon significative l'angle relatif entre la tête et le viseur 2.

Selon un autre exemple de mise en oeuvre, le procédé consiste à effectuer une calibration de la position de l'écran 4 en visant avec le viseur 2 successivement les trois cibles 5a, 5b, 5c affichées sur l'écran à des fins d'acquisition avec la télécommande et à répéter cette opération au moins une fois après s'être déplacé par rapport à sa position de mesure et d'acquisition précédente.

Selon un autre exemple de mise en oeuvre conforme à l'invention, le procédé consiste à effectuer une calibration conjointe des positions des yeux et de l'écran 4 en visant avec le viseur 2 successivement les trois cibles 5a,5b,5c,5d affichées sur l'écran 4 à des fins d'acquisition avec la télécommande et à répéter cette opération au moins une fois après s'être déplacé par rapport à sa position de mesure et d'acquisition précédente, en conservant la tête droite et en changeant d'oeii après chaque acquisition de cible.

Avant d'exploiter le dispositif de réalité virtuelle, l'utilisateur procèdera à un calibrage qui ne prendra que quelques minutes. Pour ce faire, il visera au moins trois cibles qui ont été programmées pour être visibles simultanément par l'utilisateur sur l'écran 4 du dispositif de réalité virtuelle. Chaque fois qu'une cible 5a, 5b, 5c ou 5d a été acquise, il passe à la suivante en changeant de position légèrement, sans changer le positionnement du capteur 3a de position et d'orientation de la tête.

Les moyens informatiques (matériels et logiciels) faisant partie du système de réalité virtuelle prennent aussi en compte le positionnement du viseur 2 par détection du signal émis par les capteurs 2a de positionnement et qui y sont apposés. Il y aura ainsi assez de points relevés pour connaître avec précision le positionnement des yeux par rapport au capteur 3a de position et d'orientation de la tête et la position du ou des écrans 4.

Le positionnement des écrans 4 pourra être compensé par des déformations d'images sur la base des positions des cibles pointées à l'aide du viseur 2. Ce dernier pourra comprendre ou non un système actif d'aide au pointage, par exemple un pointeur laser. Le but est bien entendu d'associer la meilleure précision et la meilleure convenance d'utilisation.

La durée de calibration selon le procédé conforme à l'invention peut être avantageusement comprise entre une et deux minutes.

La figure 3 est une représentation graphique illustrant la prise en compte des parallaxes. Cette illustration montre le lien entre la position des yeux et la parallaxe des images affichées sur l'écran 4 stéréoscopique pour l'affichage d'un point virtuel et souligne l'importance de la bonne position des yeux.

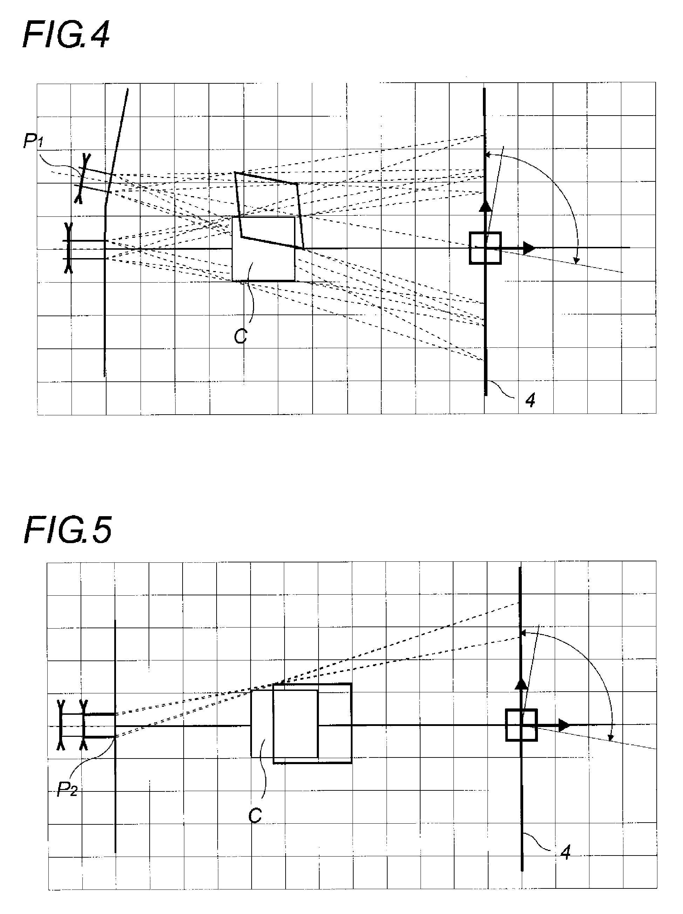

La figure 4 est une illustration d'un exemple de déformation sur un cube C, perçue avec une mauvaise position P1 de la tête de l'utilisateur du système de réalité virtuelle. Les images synthétisées sur l'écran 4 ne correspondent pas à celles que devraient voir l'utilisateur. De ce fait, par triangulation, il est possible d'estimer la déformation obtenue en retraçant la perspective correspondante au point du vue réel.

La figure 5, est une illustration d'un exemple de déformation sur le cube C, perçue avec une mauvaise position P2 des yeux de l'utilisateur du système de réalité virtuelle. De la même manière, les images synthétisées sur l'écran 4 ne correspondent pas à celles que devraient voir l'utilisateur. De ce fait, par triangulation, il est possible d'estimer la déformation obtenue en retraçant la perspective correspondante au point du vue réel.

De manière évidente, l'invention ne se limite pas aux modes de réalisation et de mise en oeuvre préférentiels décrits précédemment et représentés sur les différentes figures, l'homme du métier pouvant y apporter de nombreuses modifications et imaginer d'autres variantes, remplacer une caractéristique technique ou une étape décrite par respectivement une caractéristique technique ou une étape équivalente, sans sortir ni de la portée, ni du cadre de l'invention.

## Revendications

1. Dispositif de calibration des paramètres stéréoscopiques d'affichage d'un système de réalité virtuelle **caractérisé en ce qu'il** comprend :
• un capteur (3a) de position et d'orientation de la tête de l'utilisateur, fixé sur une paire de lunettes (3) séparatrices du type à obturation sélective de la vision droite et gauche, ladite paire de lunettes (3) étant destinée à être portée par l'utilisateur,
• un viseur (2) comportant deux mires de pointages et manipulé par l'utilisateur portant les lunettes (3) séparatrices,
• un capteur (2a) de positionnement et d'orientation apposé sur le viseur (2),
• au moins un écran (4) stéréoscopique pour afficher des cibles (5a,5b,5c,5d) de pointages sur ledit écran (4),
• une télécommande pour déclencher la capture de données lorsque l'utilisateur détecte l'alignement des mires de pointage avec une cible de pointage,
• et des moyens informatiques communiquant avec les capteurs de positionnement et d'orientation, pour traiter les données de calibration ainsi obtenues.

2. Dispositif de calibration selon la revendication 1 **caractérisé en ce que** le viseur (2) comprend d'une part un tube de visée (6) dans lequel sont intégrés deux mires de pointage (7,8) définissant des points de visée distants l'un de l'autre, à savoir un point de visée proximal et un point de visée distal et d'autre part une poignée (9) de préhension supportant le tube de visée (6) et dirigée sensiblement vers le bas lors de l'utilisation dudit viseur (2).

3. Procédé de calibration des paramètres stéréoscopiques d'affichage d'un système de réalité virtuelle, mis en oeuvre à l'aide d'un dispositif de calibration conforme à l'une quelconque des revendications 1 ou 2, consistant à :
• a) afficher sur l'écran (4) du système de réalité virtuelle, au moins trois cibles (5a,5b,5c,5d) de pointage qui ont été programmées pour être visibles par l'utilisateur,
• b) à des fins d'acquisition successive des cibles (5a,5b,5c,5d), viser lesdites cibles (5a,5b,5c,5d) à l'aide du viseur (2) et passer, après l'acquisition d'une cible, à la cible suivante en modifiant légèrement la position du viseur (2) sans changer la position des lunettes (3),
• c) détecter les signaux émis par les capteurs (2a,3a) de positionnement et de référencement pour prendre en compte à l'aide des moyens informatiques le positionnement des yeux par rapport à la paire de lunettes (3) et la position de l'écran (4) grâce à l'ensemble des points géométriques relevés,
• d) et compenser les défauts de positionnement des images stéréoscopiques par des déformations d'images sur l'écran (4).

4. Procédé de calibration selon la revendication 3 **caractérisé en ce qu'il** consiste à effectuer une calibration de la position des yeux en alignant successivement chaque oeil avec deux points de visée du viseur (2) et en déclenchant une détection par l'intermédiaire de la télécommande dès que l'alignement est atteint, puis en répétant l'opération au moins une fois en modifiant de façon significative l'angle relatif entre la tête et le viseur (2).

5. Procédé de calibration selon la revendication 3 **caractérisé en ce qu'il** consiste à effectuer une calibration de la position de l'écran (4) en visant avec le viseur (2) successivement les trois cibles (5a,5b,5c,5d) affichées sur l'écran (4) à des fins d'acquisition avec la télécommande et à répéter cette opération au moins une fois après s'être déplacé par rapport à sa position de mesure et d'acquisition précédente.

6. Procédé de calibration selon la revendication 3 **caractérisé en ce qu'il** consiste à effectuer une calibration conjointe des positions des yeux et de l'écran (4) en visant avec le viseur (2) successivement les trois cibles (5a,5b,5c,5d) affichées sur l'écran (4) à des fins d'acquisition avec la télécommande et à répéter cette opération au moins une fois après s'être déplacé par rapport à sa position de mesure et d'acquisition précédente, en conservant la tête droite et en changeant d'oeil après chaque acquisition d'une cible.
